# EUROPÄISCHE PATENTSCHRIFT

(11) **EP 1 752 035 B1**
(45) Veröffentlichungstag und Bekanntmachung des Hinweises auf die Patenterteilung: **25.03.2009**
(21) Anmeldenummer: 06015307.9
(22) Anmeldetag: 22.07.2006
(51) Int. Cl.: A01D 34/71, A01D 43/063, A01D 34/00

(54) **Sichel-Rasenmäher mit Mulchfunktion**
Sickle lwanmower with mulching function
Tondeuse à faucille avec une fonction scarificateur

(30) Priorität: 12.08.2005 DE 202005012753 U
(43) Veröffentlichungstag der Anmeldung: 14.02.2007
(73) Patentinhaber: Wolf-Garten GmbH & Co. KG, 57518 Betzdorf (DE)
(72) Erfinder: Held, Peter, 57584 Scheuerfeld (DE); Kipping, Andreas, 57537 Selbach (DE)
(74) Vertreter: Koch, Günther

(56) Entgegenhaltungen:
- DE-A1- 4 120 278
- DE-U1- 20 313 238
- US-A- 4 890 446
- US-A- 5 355 666

## Beschreibung

Die Erfindung bezieht sich auf einen Sichel-Rasenmäher mit Mulchfunktion der im Oberbegriff des Anspruchs 1 angegebenen Gattung.

Um den Aufwand zu vermeiden, der mit dem Einsammeln und der Entsorgung des abgeschnittenen Grases verknüpft ist, werden in jüngster Zeit Rasenmäher angeboten, die wahlweise ein Mulchen ermöglichen. Dabei wird das Schnittgut derart in feinste Partikel aufgeteilt, dass diese unmittelbar auf dem Boden abgelegt werden und verbleiben können und eine Düngung der Grasnabe bewirken. Ein solches Mulchen ist jedoch im Allgemeinen nur dann möglich, wenn der zu mähende Rasen eine vorbestimmte Höhe nicht überschritten hat. Ein allgemein verwendbarer Rasenmäher muss daher so ausgebildet sein, dass er sowohl ein Aufsammeln des geschnittenen Gutes in einem Fangkorb ermöglicht (z.B. bei hohem Rasen) als auch umschaltbar ist auf eine Mulchfunktion.

Bei einem gattungsgemäßen Kombinationsgerät gemäß DE 41 20 278 ist der Auswurfkanal durch eine kreisbogenförmig gekrümmte Platte absperrbar, die im geschlossenen Zustand einen Teil der Mantelfläche der Mähschüssel bildet. Dies ermöglicht zwar einen optimalen Mulchbetrieb bei geschlossener Mähschüssel, jedoch erfordert das Ausschwenken der Mulchklappe in die Mähstellung zumindest bei einem Heckauswurf einen erheblichen Raumbedarf, der eine Vergrößerung des Chassis in Breite und/oder Länge bedingt. In der Mähstellung behindert die gekrümmte Mulchklappe einen Klappenübergang in den Auswurfkanal.

Die DE 10 2004 016 707 beschreibt einen Mulchmäher, bei dem eine im Wesentlichen ebene oder schwach gekrümmte Mulchklappe vorgesehen ist, die in beiden Arbeitsstellungen günstig wirksam ist und eine Vergrößerung des Chassis gegenüber herkömmlichen Rasenmähern unnötig macht. Dabei ist ein zusätzliches Trägerblech vorgesehen, das den Schneidkanal im Bereich der Auswurföffnung zur Rasenfläche hin abschließt.

Der Erfindung liegt die Aufgabe zugrunde, einen Mulch-Rasenmäher zu schaffen, dessen Chassis im Grundaufbau einem herkömmlichen Rasenmäherchassis entspricht und in beiden Arbeitsstellungen eine optimale Verarbeitung gewährleistet.

Gelöst wird die gestellte Aufgabe durch die im Kennzeichnungsteil des Anspruchs 1 angegebenen Merkmale. Es ist klar, dass die Anpassung an die zylindrische Kreisform der Mähschüssel und die ebene Seitenwand des Auswurfkanals um so besser erreicht werden kann, je größer die Zahl der Teilklappen ist. Es hat sich jedoch in der Praxis gezeigt, dass bereits durch die Anordnung von zwei Teilklappen optimale Ergebnisse erreicht werden können. Auf diese Weise kann auch die für Nur-Mäher vorgesehene Chassisgeometrie aufrecht erhalten bleiben, da durch die Zweiteilung der Mulchklappe keine Überschneidung mit der Messerbahn zu befürchten ist und im geöffneten Zustand kein Teil der Klappenanordnung in den Auswurfbereich des Schneidkanals einsteht, was früher zu einer Kollision mit dem Mundstück der Fangeinrichtung führen konnte.

In Verbindung mit dieser Mehrfachklappenanordnung wurde erfindungsgemäß eine Gelenkgetriebeeinstellung geschaffen, die eine einfache Verstellung der Klappenanordnung mittels eines Drehknopfes ermöglicht und die Klappenanordnung in der jeweiligen Arbeitsstellung hält, ohne dass eine Rastverbindung erforderlich wäre, weil die Klappenanordnungen in der jeweiligen Arbeitsstellung durch den auf sie wirkenden Druck des Mähgutes gehalten werden. Dies geschieht dadurch, dass die Gelenkanordnung eine Totpunktstellung aufweist und nach Überschreiten dieser Stellung eine formschlüssige Verriegelung über das Gelenkgetriebe erhalten wird.

Weitere Vorteile und Ausgestaltungen der Erfindung ergeben sich aus den Unteransprüchen und der folgenden Beschreibung eines Ausführungsbeispiels.

Nachstehend wird ein Ausführungsbeispiel der Erfindung anhand der Zeichnung beschrieben. In der Zeichnung zeigen:
Fig. 1 ist eine perspektivische Ansicht des Rasenmäherchassis schräg von unten betrachtet mit geschlossener Mulchklappe;
Fig. 2 ist eine perspektivische Ansicht des Rasenmäherchassis schräg von unten betrachtet mit geöffneter Mulchklappe;

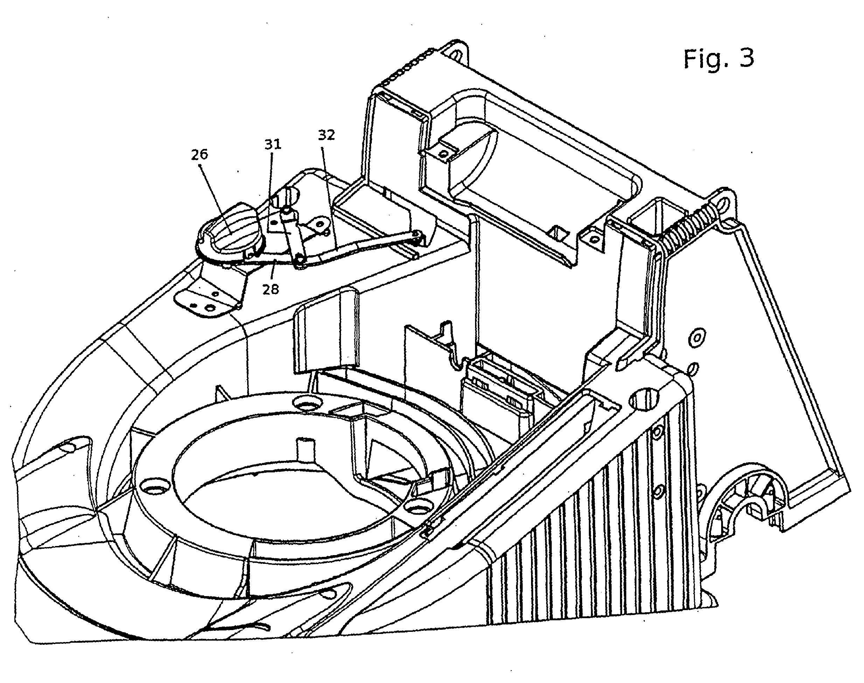

Fig. 3 ist eine schräg von oben betrachtete Teildarstellung des Chassis mit dem Einstellmechanismus der Mulchklappe bei geschlossener Klappenstellung;

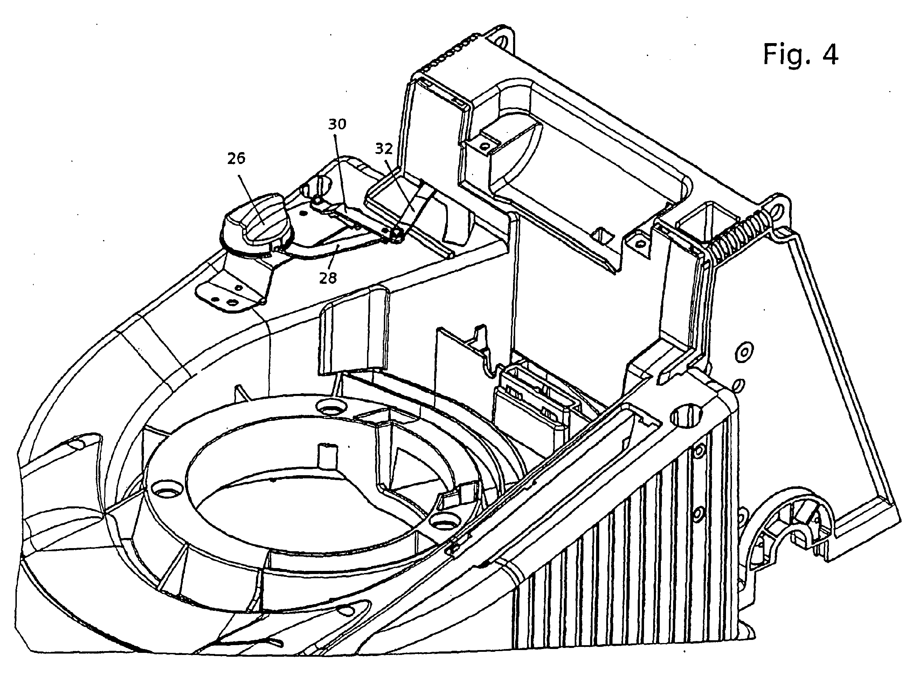

Fig. 4 ist eine der Fig. 3 entsprechende Ansicht mit dem Einstellmechanismus in geöffneter Klappenstellung;
Fig. 5 ist eine perspektivische Einzeldarstellung der Mulchklappenanordnung in geschlossener Klappenstellung gemäß Fig. 1;
Fig. 6 ist eine der Fig. 5 entsprechende Einzeldarstellung der Mulchklappenanordnung in geöffneter Klappenstellung gemäß Fig. 2.

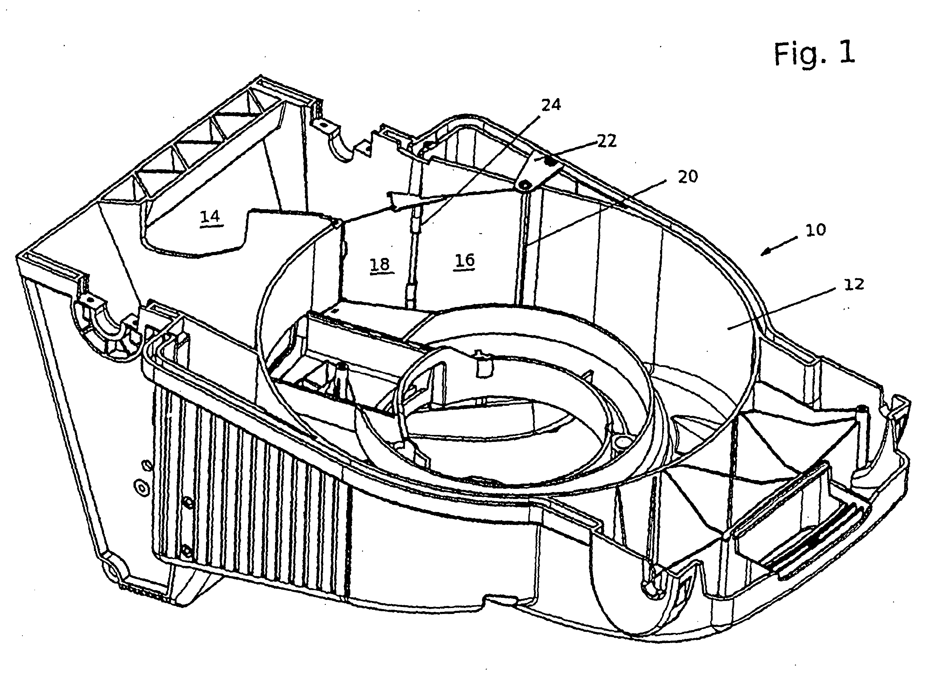

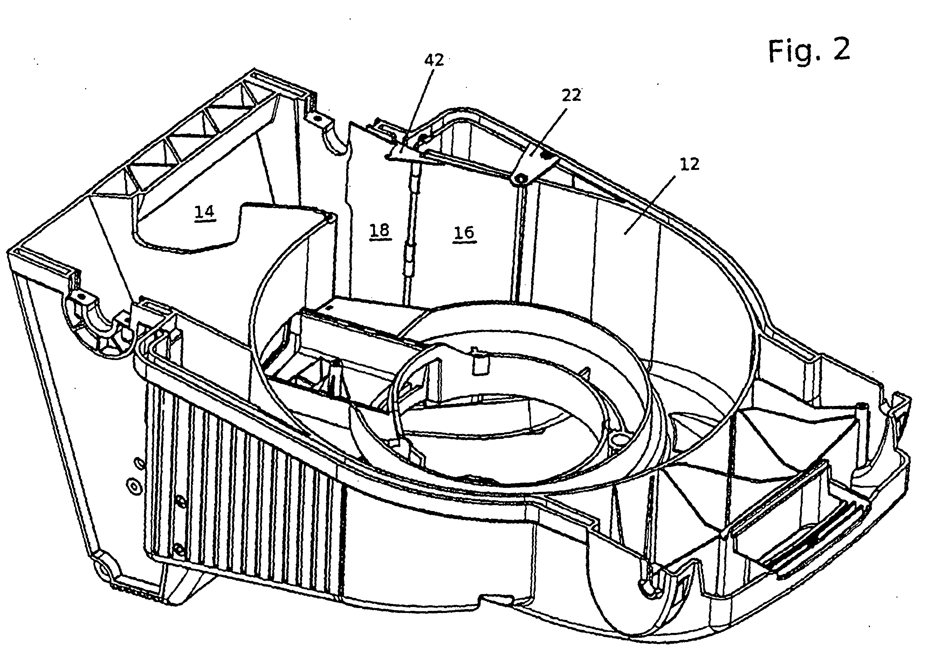

Das Chassis 10 des erfindungsgemäßen Mulchmähers weist eine kreisrunde Mähschüssel 12 auf, deren Durchmesser im Wesentlichen der Spurweite der nicht dargestellten Laufräder entspricht. In dieser Mähschüssel läuft der in der Zeichnung nicht dargestellte Mähbalken mit vertikaler Achse um. An die Mähschüssel schließt tangential über einen Ausschnitt ein Auswurfkanal 14 an, über den das Mähgut in einen anschließenden Fangkorb gefördert werden kann. Wenn ein Mulchen gewünscht wird, muss der Ausschnitt der Mähschüssel nach dem Auswurfkanal geschlossen werden, damit das Mähgut innerhalb der Mähschüssel mehrfach vom Messerbalken getroffen und in Partikelgröße zerkleinert direkt auf dem Rasen abgelegt werden kann. Das Abschließen des Ausschnittes sollte im Idealfall durch einen zylindrischen Abschnitt erfolgen, der die zylindrische Wand fortsetzt. Andererseits sollte in Öffnungsstellung, d.h. beim Mähen mit Aufnahme des Mähgutes im Fangkorb, der Ausschnitt weitgehend offen sein, so dass das geschnittene Gras ungehindert über den Auswurfkanal in den Fangkorb gelangen kann. Um diesen beiden Forderungen in optimaler Weise Rechnung zu tragen, ist gemäß der Erfindung eine zweiteilige Mulchklappenanordnung vorgesehen. Danach weist die Mulchklappenanordnung eine erste Mulchklappe 16 und eine zweite Mulchklappe 18 auf, die eben oder schwach gekrümmt ausgebildet sind. Die erste Mulchklappe 16 ist über einen Scharnierstab 20 gelenkig gelagert, der am oberen Ende im Chassis und am unteren Ende in einer Lagerlasche 22 drehbar derart gelagert ist, dass die Klappe 16 an die Mantelfläche der Mähschüssel anschließt. Am Ende der ersten Mulchklappe 16 ist über ein weiteres Scharniergelenk 24 die zweite Mulchklappe 18 angelenkt, die in Schließstellung gemäß Fig. 1 mit ihrer Hinterkante an die Mantelfläche der Mähschüssel anschließt, so dass in Mulchstellung der Ausschnitt nach dem Auswurfkanal geschlossen ist, wobei sich die beiden Klappen 16, 18 der Mantelfläche der Mähschüssel 12 anpassen. Aus Fig. 2 ist ersichtlich, dass sich die beiden Klappen 16 und 18 in Öffnungsstellung dicht an die Seitenwand des Auswurfkanals 14 anlegen, so dass eine ungestörte Zuführung des geschnittenen Grases nach der Fangvorrichtung gewährleistet ist.

Die Einstellung der Klappen 16, 18 in die Mulchstellung (geschlossene Mähschüssel) und die Mähstellung (freier Übergang in den Auswurfkanal) erfolgt über einen auf der Oberseite des Chassis gelagerten und von oben her leicht zugänglichen Drehknopf 26. Die Übertragung der Drehbewegung des Drehknopfes erfolgt über ein Gelenkgetriebe, welches gewährleistet, dass in den beiden Endstellungen eine Totlagenposition erreicht wird, die gewährleistet, dass die Klappen in der eingestellten Stellung verbleiben, ohne dass eine Verrastung erforderlich wäre. Dieses Gelenkgetriebe besteht aus einem ersten Lenker 28, einem zweiten Lenker 30 und einem dritten Lenker 32. Der erste Lenker 28 ist an einem Ende drehfest mit der Stellwelle des Drehknopfes 26 verbunden und am anderen Ende über eine Drehachse am zweiten Lenker 30 angelenkt. Der zweite Lenker ist einerseits am Chassis 10 und andererseits über eine Drehachse am dritten Lenker 32 angelenkt, der mit seinem anderen Ende über eine Drehachse 38 an einem Lagerfortsatz 40 der zweiten Mulchklappe 18 angelenkt ist. Die Anlenkachse 34 des ersten Lenkers 28 liegt in der Nähe der Drehachse 36 zwischen zweitem und drittem Lenker.

Die erste Klappe 16 trägt im Bereich des Scharnieres 24 auf der Unterseite ein Anschlagblech 42 mit zwei Endanschlägen 44 und 46, zwischen denen ein mit der zweiten Mulchklappe 18 verbundener Ansatz 48 beweglich ist.

Durch Drehen des Drehknopfes 26 wird über das Gelenkgetriebe die zweite Klappe 18 um ihr Scharnier 24 verschwenkt, bis ihr Ansatz 48 an dem jeweiligen Anschlag 44 bzw. 46 anschlägt, und danach wird die erste Mulchklappe 16 mitgenommen und so beide Klappen in die jeweilige Endstellung überführt.

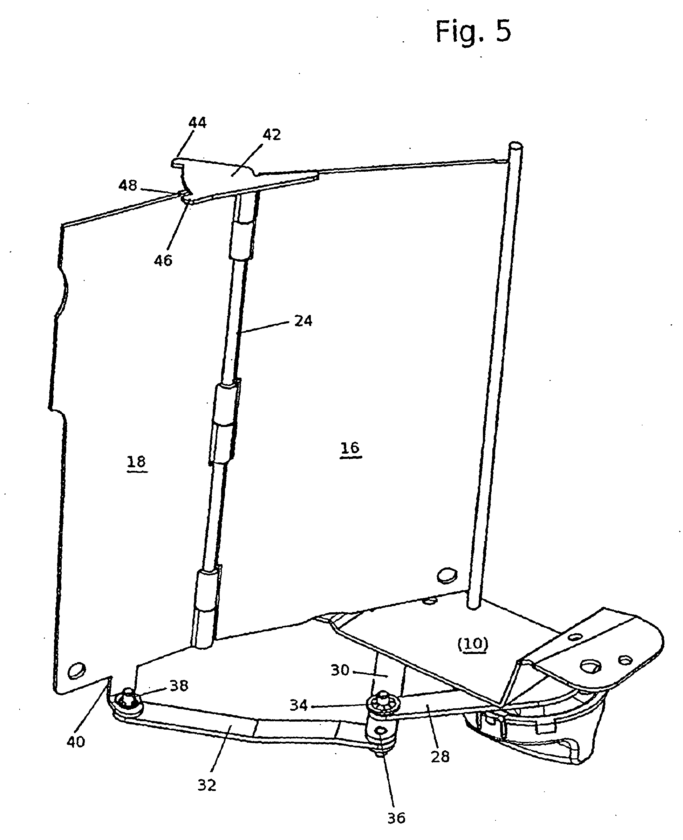

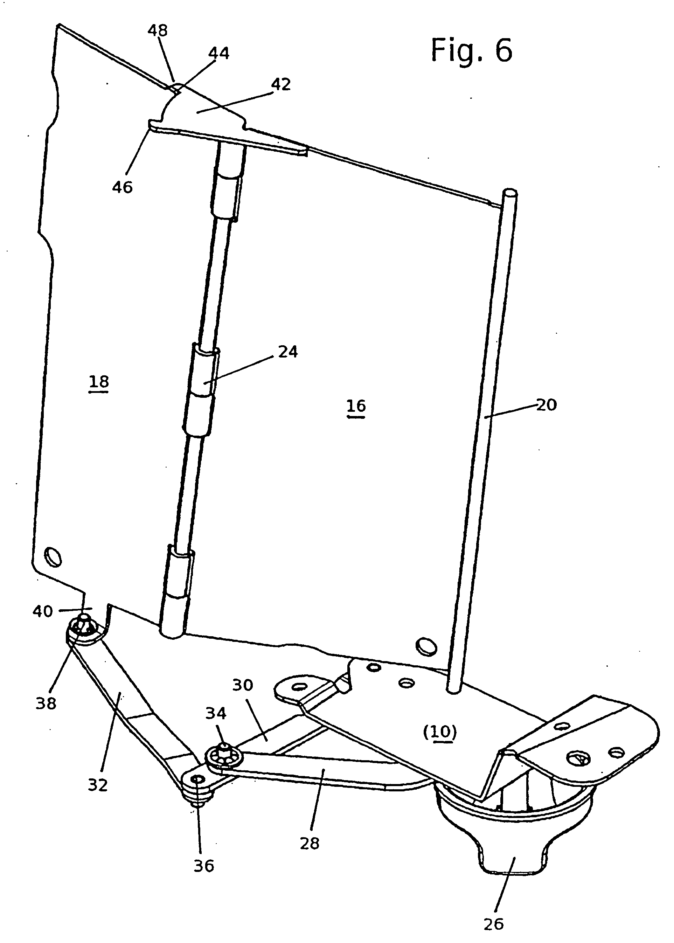

Wie aus der Zeichnung ersichtlich, werden die Klappen 16, 18 in Mulchstellung (Fig. 1 und Fig. 5) durch die auf sie wirkenden radial nach außen gerichteten Kräfte in ihrer Arbeitsstellung gehalten, weil das Gelenkgetriebe über die Totpunktstellung verschwenkt ist. In Mähstellung (Fig. 2 und 6) bewirken die auf die Klappen wirkenden Kräfte ein Anlegen an die Seitenwand des Auswurfkanals, so dass ein freier Durchtritt des geschnittenen Grases gewährleistet ist.

### Bezugszeichenliste

- 10: Chassis
- 12: Mähschüssel
- 14: Auswurfkanal
- 16: erste Mulchklappe
- 18: zweite Mulchklappe
- 20: Scharnierstab
- 22: Lagerlasche
- 24: Scharnier
- 26: Drehknopf
- 28: erster Lenker
- 30: zweiter Lenker
- 32: dritter Lenker
- 34: Drehachse
- 36: Drehachse
- 38: Drehachse
- 40: Lagerlasche
- 42: Anschlagblech
- 44: Endanschlag
- 46: Endanschlag
- 48: Ansatz

## Patentansprüche

1. Sichel-Rasenmäher mit Mulchfunktion mit einer bei Mulchbetrieb durch eine Mulchklappe abschließbaren tangential an eine Mähschüssel (12) ansetzenden Auswurfkanal (14),
**dadurch gekennzeichnet, dass** die Mulchklappe aus mehreren gelenkig miteinander verbundenen Teilen (16, 18) besteht.

2. Sichel-Rasenmäher nach Anspruch 1,
**dadurch gekennzeichnet, dass** die Teilklappen (16, 18) eben oder schwach gekrümmt ausgebildet sind.

3. Sichel-Rasenmäher nach Anspruch 1,
**dadurch gekennzeichnet, dass** die Teilklappen (16, 18) von einem Stellglied (26) über ein Gelenkgetriebe (28, 30, 32) derart einstellbar sind, dass sie durch den auf sie wirkenden Druck des Mähgutes in die jeweilige Arbeitsstellung gedrückt und in dieser gehalten werden.

4. Sichel-Rasenmäher nach Anspruch 3,
**dadurch gekennzeichnet, dass** das Gelenkgetriebe über eine Totpunktstellung in die jeweilige Arbeitsstellung schaltbar ist.

5. Sichel-Rasenmäher nach einem der vorhergehenden Ansprüche,
**dadurch gekennzeichnet, dass** eine erste Teilklappe (16) über einen Gelenkstab (20) an die Mantelfläche der Mähschüssel anschließt und über ein weiteres Scharnier (24) mit einer zweiten Teilklappe (18) verbunden ist.

6. Sichel-Rasenmäher nach Anspruch 5,
**dadurch gekennzeichnet, dass** das Gelenkgetriebe an der zweiten Teilklappe (18) angreift.

7. Sichel-Rasenmäher nach den Ansprüchen 5 und 6,
**dadurch gekennzeichnet, dass** die jeweilige Arbeitsstellung über einen Drehknopf (26) einstellbar ist, über den ein erster Lenker (28) des Gelenkgetriebes verschwenkbar ist, der an einem zweiten Lenker (30) angreift, an dem ein dritter Lenker (32) angelenkt ist, der gelenkig mit der zweiten Teilklappe (18) verbunden ist.

8. Sichel-Rasenmäher nach den Ansprüchen 5 bis 7,
**dadurch gekennzeichnet, dass** ein Anschlagblech (42) vorgesehen ist, welches die Schwenkstellungen zwischen den beiden Teilklappen (16, 18) begrenzt.

9. Sichel-Rasenmäher nach Anspruch 8,
**dadurch gekennzeichnet, dass** das Anschlagblech von der ersten Teilklappe (16) getragen wird und dieses Endanschläge (44, 46) aufweist, zwischen denen ein Anschlagansatz (48) der zweiten Teilklappe (18) beweglich ist.

## Claims

1. Sickle lawn mower with mulching function comprising a discharge channel (14) adapted to be closed by a mulching flap and tangentially adjoining to a mowing chamber (12),
**characterized in that** said mulching flap consists of a plurality of sections (16, 18) hingedly connected to one another.

2. Sickle lawn mower according to claim 1, **characterized in that** the flap sections (16, 18) have a flat or slightly arcuate shape.

3. Sickle lawn mower according to claim 1, **characterized in that** the flap sections (16, 18) are adjustable by means of an actuator (26) via a linkage (28, 30, 32) such that they are forced into a respective working position and held therein by the pressure of the grass cuttings.

4. Sickle lawn mower according to claim 3, **characterized in that** the linkage is switchable across a dead center position into the respective working position.

5. Sickle lawn mower according to any of the preceding claims, **characterized in that** a first flap section (16) is connected via a hinge rod (20) to the circumferential side wall of the mowing chamber and is connected via a further hinge (24) to a second flap section (18).

6. Sickle lawn mower according to claim 5, **characterized in that** the linkage acts on the second flap section (18).

7. Sickle lawn mower according to the claims 5 and 6, **characterized in that** the respective working position is adjustable by means of a turning knob (26) by means of which a first link (28) of the linkage is pivotable, said first link (28) engaging a second link (30) to which a third link (32) is coupled which is pivotably connected to the second flap section (18).

8. Sickle lawn mower according to the claims 5 through 7, **characterized in that** a limit stop sheet metal part (42) is provided limiting the mutual pivot positions of the two flap sections (16, 18).

9. Sickle lawn mower according to claim 8, **characterized in that** said limit stop sheet metal part is supported by the first flap section (16) and is provided with limit stops (44, 46) in-between which an abutment projection (48) of the second flap section (18) is movable.

## Revendications

1. Tondeuse à faucille avec une fonction scarificateur, comportant un canal d'éjection (14) posé tangentiellement sur un bac de tonte pouvant être fermé par une trappe à mulch (12),
**caractérisée en ce que** la trappe à mulch est composée de plusieurs pièces (16, 18) reliées de manière articulée entre elles.

2. Tondeuse à faucille selon la revendication 1,
**caractérisée en ce que** les partie de trappes (16, 18) sont planes ou légèrement courbées.

3. Tondeuse à faucille selon la revendication 1,
**caractérisée en ce que** les partie de trappes (16, 18) sont réglables par un élément de réglage (26) via une transmission articulée (28, 30, 32) d'une manière telle qu'elles sont poussées par la pression leur agissant dessus de l'herbe tondue dans la position de travail respective et y sont maintenues.

4. Tondeuse à faucille selon la revendication 3,
**caractérisée en ce que** la transmission articulée peut être commutée en passant par une position de point mort vers la position de travail respective.

5. Tondeuse à faucille selon une des revendications précédentes,
**caractérisée en ce qu'**une première partie de trappe (16) se raccorde par une barre articulée (20) à la surface d'enveloppe du bac de tonte et est reliée par une autre charnière (24) à une deuxième partie de trappe (18).

6. Tondeuse à faucille selon la revendication 5,
**caractérisée en ce que** la transmission articulée s'engrène sur la deuxième partie de trappe (18).

7. Tondeuse à faucille selon les revendications 5 et 6,
**caractérisée en ce que** la position de travail respective est réglable à l'aide d'un bouton rotatif (26) qui peut être pivoté par une première bielle (28) de la transmission articulée, laquelle bielle s'engrène sur une deuxième bielle (30) à laquelle s'articule une troisième bielle (32) qui est reliée de manière articulée à la deuxième partie de trappe (18).

8. Tondeuse à faucille selon les revendications 5 à 7,
**caractérisée en ce qu'**il est prévu une tôle de butée (42) qui limite les positions de pivotement entre les deux parties de trappe (16, 18).

9. Tondeuse à faucille selon la revendication 8,
**caractérisée en ce que** la tôle de butée est supportée par la première partie de trappe (16) et qu'elle présente des butées terminales (44, 46) entre lesquelles un élément de butée (48) de la deuxième partie de trappe (18) est mobile.
